# EUROPÄISCHE PATENTSCHRIFT

(11) **EP 2 951 804 B1**
(45) Veröffentlichungstag und Bekanntmachung des Hinweises auf die Patenterteilung: **15.03.2017**
(21) Anmeldenummer: 14701754.5
(22) Anmeldetag: 28.01.2014
(51) Int. Cl.: G08G 1/16, G06K 9/00, G01S 17/02, G01S 13/93

(54) **ERSTELLEN EINES UMFELDMODELLS FÜR EIN FAHRZEUG**
CREATING A MODEL FOR THE SURROUNDINGS OF A VEHICLE
CRÉATION D'UN MODÈLE POUR LES ENVIRONS D'UN VEHICULE

(30) Priorität: 30.01.2013 DE 102013201545
(43) Veröffentlichungstag der Anmeldung: 09.12.2015
(73) Patentinhaber: Bayerische Motoren Werke Aktiengesellschaft, 80809 München (DE)
(72) Erfinder: AEBERHARD, Michael, 80805 München (DE); KLÖDEN, Horst, 80797 München (DE)
(86) Internationale Anmeldenummer: PCT/EP2014/051633
(87) Internationale Veröffentlichungsnummer: WO 2014/118178

(56) Entgegenhaltungen:
- EP-A1- 2 498 185
- EP-A2- 1 486 932
- EP-A2- 1 959 675
- WO-A1-2006/015894
- WO-A1-2008/043852
- US-A1- 2009 303 026
- US-A1- 2012 035 846

## Beschreibung

Die Erfindung betrifft ein Verfahren zum Erstellen eines Umfeldmodells für ein Fahrzeug, eine entsprechende Vorrichtung und ein entsprechendes Computerprogramm. Fahrzeuge werden in Zukunft häufiger mit komplexen Fahrerassistenzfunktionen ausgestattet werden, wie beispielsweise Ausweichassistenten oder Assistenten zur Warnung vor gefährdeten Fußgängern. Diese komplexen Assistenzfunktionen benötigen in vielen Fällen in Echtzeit genaue Informationen über Objekte im Umfeld des Fahrzeugs, die über ein Umfeldmodell bereitgestellt werden können. Zu diesem Zweck werden typischerweise verschiedene Sensoren, wie beispielsweise Kameras, Radar, Lidar und Ultraschallsensoren, in Fahrzeuge integriert und zur Erkennung des Umfeldes verwendet. In einem von derzeitigen Ansätzen werden dabei zunächst die Sensordaten jedes einzelnen Sensors ausgewertet und in diesen jeweiligen Sensordaten Objekte im Umfeld des Fahrzeugs identifiziert. Jeder Sensor stellt somit die aufgrund seiner Messungen erkannten Objekte bereit. Ein Fusionsmodul verbindet dann die von jedem Sensor bereitgestellten Informationen zu den erkannten Objekten zu einem umfassenden Umfeldmodell. Eine Möglichkeit der Ausführung eines solchen Verfahrens ist beispielsweise in "High-Level Sensor Data Fusion Architecture for Vehicle Surround Environment Perception", 8th International Workshop on Intelligent Transportion, Hamburg, Germany, March 2011 von Aeberhard, M. und Kämpchen, N. beschrieben worden.

Ein Nachteil der vorgehend beschriebenen Erstellung eines Umfeldmodells ist, dass für jeden Sensor dessen vollständige Sensordaten verarbeitet werden müssen. Dies ist vergleichsweise rechenintensiv und verhindert die Verwendung von Sensoren, deren Sensordaten nicht in Echtzeit verarbeitet werden können, insbesondere hochaufgelöste Messungen von hochauflösenden Sensoren. So können beispielsweise hochaufgelöste Aufnahmen von hochauflösenden Kameras aufgrund mangelnder Rechenkapazität in Fahrzeugen nicht vollständig in Echtzeit verarbeitet werden. Die Sensordaten dieser Kameras stehen somit nicht zur Erstellung des Umfeldmodells zur Verfügung.

In einem anderen Ansatz des Standes der Technik ist es in der Bildverarbeitung von Sensordaten einer Kamera eines Fahrzeugs bekannt ein zweistufiges Verfahren einzusetzen. Zunächst werden die Sensordaten einer Kamera nach sogenannten Regions of Interest (ROI), also Interessensbereichen, durchsucht, die dann im Folgenden einer genaueren Bildverarbeitung und Objekterkennung unterzogen werden. Auf diese Weise können im ersten Schritt erreichte Erkennungen von Objekten bestätigt werden oder die Klassifikation eines Objektes verbessert werden. Ein solches Verfahren ist in "Real Time ROI Generation for Pedestrian Detection", International Conference on Computational Intelligence and Software Engineering, December 2009, Seiten 1 bis 4, von Zhao, X. et al. beschrieben worden.

Ein Nachteil dieses Verfahrens ist, dass nur im ersten Schritt durch die Sensordaten der Kamera identifizierte ROI weiter bearbeitet werden. Decken diese ROIs nicht alle tatsächlich relevanten Bereiche des Umfelds ab, werden die verbleibenden relevanten Bereiche nicht untersucht.

Die Druckschrift US 2009/303026 A1 offenbart eine Vorrichtung zum Erfassen von kritischen Bereichen und einer Fußgängererkennung. Diese erfasst zunächst kritische Bereiche von einer städtischen Umgebung und führt dann eine gezielte Suche nach Fußgängern aus.

Die Druckschrift WO 2006/015894 A1 offenbart ein Verfahren und eine Vorrichtung zum Betreiben eines Sensorsystems, wobei eine Verarbeitungseinheit mit wenigstens einem Sensor des Sensorsystems über Kommunikationsverbindungen in Verbindung steht und die Verarbeitungseinheit an wenigstens einen der Sensoren Daten übermittelt, welche die wenigstens einen Erfassungs- und/oder Detektionsbereich des Sensors und/oder Steuerdaten zur Steuerung des Modus des Sensors repräsentieren.

Die Druckschrift EP 2 498 185 A1 offenbart eine Vorrichtung zur Steuerung mehrerer Applikationen in der Bildverarbeitung für Fahrzeuge. Die Vorrichtung sagt dynamisch die Verarbeitungszeit für jede Applikation voraus und teilt die Anwendungen dann auf der Basis der erwarteten Verarbeitungszeit ein.

Aufgabe an den Fachmann ist es ein verbessertes Verfahren zur Erstellung eines Umfeldmodells bereitzustellen.

Diese Aufgabe wird durch ein Verfahren nach Anspruch 1, eine Vorrichtung nach Anspruch 9 und ein Computerprogramm nach Anspruch 10 gelöst. Vorteilhafte Weiterbildungen sind in den abhängigen Ansprüchen definiert.

In einem ersten Aspekt umfasst ein Verfahren zum Erstellen eines Umfeldmodells für ein Fahrzeug: Erstellen eines ersten Umfeldmodells basierend auf Informationen zu Objekten, die mithilfe von Sensordaten von Sensoren einer Gruppe von ersten Sensoren erkannt wurden; wobei das Umfeldmodell Objekte und deren Position beschreibt; Bestimmen von einem oder mehreren Interessensbereichen im ersten Umfeldmodell zur weiteren Untersuchung; Empfangen von Sensordaten eines zweiten Sensors, der nicht in der Gruppe der ersten Sensoren umfasst ist, nur für den einen oder die mehreren Interessensbereiche; Erkennen eines Objektes oder einer Eigenschaft eines Objektes in dem einen oder den mehreren Interessensbereichen basierend auf den empfangenen Sensordaten des zweiten Sensors; Erstellen eines zweiten Umfeldmodells basierend auf dem ersten Umfeldmodells und dem erkannten Objekt oder der erkannten Eigenschaft des Objektes in dem einen oder den mehreren Interessensbereichen.

Dieses Verfahren bietet mehrere Vorteile: Erstens bietet es die Möglichkeit auch hochauflösende Sensoren bei der auf Objekten basierenden Erstellung des Umfeldmodells mit einzubinden und trotzdem die Echtzeitfähigkeit zu erhalten. Die Sensordaten des hochauflösenden Sensors, also einem Sensor, der eine so große Datenmenge bereitstellt, dass sie nicht in Echtzeit verarbeitet werden kann, werden nicht vollständig zur Objekterkennung eingesetzt. Stattdessen werden die Sensordaten nur in Interessensbereichen verarbeitet. Die darin erkannten Objekte werden wiederum zur Verbesserung des Umfeldmodells verwendet. Die in den Interessensbereichen erkannten Objekte können Merkmale eines Fußgängers sein, dessen Kopfpose oder Blickrichtung.

Gleichzeitig ermöglicht es das Verfahren bei der Auswahl der Interessensbereiche das auf Daten mehrerer Sensoren basierende Umfeldmodell zu verwenden. Die Auswahl der Interessensbereiche geschieht also auf verbesserter Basis gegenüber einer Auswahl der Interessensbereiche nur basierend auf einer Kameraaufnahme wie im Stand der Technik. Die Interessensbereiche können somit so gewählt werden, dass das zweite Umfeldmodell Informationen bereitstellen kann, die im ersten Umfeldmodell nicht enthalten sind. Die Interessensbereiche können auch Regions of Interest genannt werden.

Die verbesserte Basis kann dazu verwendet werden Hypothesen über die Anwesenheit von Objekten aufzustellen, die bisher mit nicht-hochauflösenden Sensoren noch nicht erkannt wurden und deren Erkennung nur mit einem hochauflösenden Sensor möglich ist. Diese Hypothese kann dann mit einem entsprechend gewählten Interessensbereich und dem Einsatz des zweiten Sensors bestätigt oder widerlegt werden.

Die Interessensbereiche können zum Beispiel auf Hypothesen über die mögliche Anwesenheit von Fußgängern basieren, die dann anhand der Untersuchung (Objekterkennung) mithilfe des zweiten Sensors bestätigt oder verworfen werden. Zusätzlich kann die Objekterkennung mithilfe des zweiten Sensors zusätzliche Merkmale (hierin auch als Objekte verstanden) liefern, beispielsweise die Kopfpose eines Fußgängers oder ein Blinkersignal eines Fahrzeugs. Die Hypothesen und damit Interessensbereiche können beispielsweise aufbauend auf bereits kurzzeitig erkannten und dann nicht mehr erkannten Objekten erzeugt werden. Zusätzlich oder alternativ können die Interessensbereiche auch aufgrund der Vermutung der Anwesenheit eines Objektes aufgrund der Situation gemäß dem Umfeldmodell erzeugt werden. Eine solche Situation ist beispielsweise eine Reihe parkender Fahrzeuge mit der Vermutung eines bisher nicht erkannten teilverdeckten Fußgängers zwischen den Fahrzeugen. Ein solcher teilverdeckter Fußgänger kann häufig nur über einen hochauflösenden Sensor erkannt werden. Das Verfahren ermöglicht so eine Erkennung von Objekten, die ansonsten unerkannt geblieben wären.

Insgesamt können somit durch das Verfahren verbessert klassifizierte oder positionierte Objekte, im ersten Umfeldmodell nicht umfasste Objekte und im ersten Umfeldmodell nicht umfasste Merkmale (als Unterfall zu den Objekten) bereitgestellt werden.

Eine Gruppe von Sensoren kann einen, zwei oder mehr Sensoren umfassen. Ein Objekt kann Eigenschaften aufweisen wie Geschwindigkeit, Beschleunigung, Ausdehnung (Länge, Breite, Höhe) und eine Klassifikation. Diese Eigenschaften können im ersten und zweiten Umfeldmodell umfasst sein.

In dem Verfahren können die Schritte des Empfangens von Sensordaten eines zweiten Sensors, der nicht in der Gruppe der ersten Sensoren umfasst ist, für den einen oder die mehreren Interessensbereiche; und des Erkennen von Objekten in dem einen oder den mehreren Interessensbereichen basierend auf den empfangenen Sensordaten des zweiten Sensors im zweiten Sensor ausgeführt werden.

Das bedeutet, dass der zweite Sensor Informationen zu dem einen oder den mehreren zu untersuchenden Interessensbereichen empfängt, das Umfeld in diesem oder diesen Bereichen erfasst und die Verarbeitung der eigenen Sensordaten übernimmt um Objekte und Eigenschaften zu erkennen. Die Ergebnisse der Erkennung durch den zweiten Sensor werden dann zurück übertragen (an die Funktion, die das zweite Umfeldmodell erstellt). In dieser Ausprägung können aus Effizienzgründen vom hochauflösenden Sensor nur die Änderungen, die an schon im ersten Umfeldmodell umfassten Objekten vorzunehmen sind, vom hochauflösenden Sensor zurück übertragen werden. Auch das Hinzufügen eines neuen Grids oder modifizierten Grids wird hierin also Objekt verstanden. Auch kann die Änderung ein völlig neu erkanntes Objekt betreffen, das bisher im ersten Umfeldmodell noch nicht umfasst war.

Das Verfahren kann also derart arbeiten, dass die ersten Sensoren und der zweite Sensor bereits die Objekterkennung leisten und die erkannten Objekte und deren Position an ein Fusionsmodul liefern (beispielsweise als Objektlisten). In dem Fusionsmodell können die Informationen zu den Objekten mittels Track-to-Track Fusionsalgorithmen, wie sie im Stand der Technik bekannt sind, beispielsweise aus der Veröffentlichung "Track-to-Track Fusion with Asynchronous Sensors using Information Matrix Fusion for Surround Environment Perception", IEEE Transactions on Intelligent Transportion Systems, vol. 13, no. 4, Dezember 2012, Seiten 1717 bis 1726. Alternativ kann die Erkennung der Objekte auch außerhalb der ersten Sensoren oder des zweiten Sensors erfolgen, beispielsweise im Fusionsmodul. Aus den ersten Umfelddaten können weitere Informationen extrahiert werden und die Situation des Fahrgeschehens interpretiert werden, zum Beispiel durch eine Zuordnung von Objekten zu Fahrspuren.

Das Verfahren kann auch das Senden des einen oder der mehreren Interessensbereiche an den zweiten Sensor umfassen. Der Sensor verarbeitet dann die entsprechenden Sensordaten um Objekte darin zu erkennen. Alternativ kann vorgesehen sein, dass der Schritt des Bestimmens der Interessensbereiche bzw. des Interessensbereiches von dem zweiten Sensor selbst basierend auf dem ersten Umfeldmodell vorgenommen wird.

Das zweite Umfeldmodell kann mehreren Fahrerassistenzfunktionen zur Verfügung gestellt werden. Innerhalb der Fahrerassistenzfunktion kann eine weitere funktionsspezifische Interpretation des Umfeldmodells und der abgebildeten Situation, in der sich das Fahrzeug befindet, vorgenommen werden. Diese Interpretation kann beispielsweise zu einer Warnung oder einem aktiven Brems-/ oder Lenkeingriff führen.

Dieses Verfahren ermöglicht die Einbindung eines hochauflösenden Sensors, um Umfelddaten und ein Umfeldmodell effizient zu bestätigen und zu erweitern. Mit ROIs, die auf Basis der fusionierten Umfelddaten anderer Sensor generiert werden, kann der hochauflösende Sensor das Umfeldmodell rechnereffizient und punktuell untersuchen. Damit ist es möglich die Vorteile eines hochauflösenden Sensors, wie die Erkennung von Objektdetails, -merkmalen und -prognosen, in das Umfeldmodell zu integrieren. Ebenfalls ist es möglich für noch nicht erkannte Objekt anhand einer abgeleiteten Situation des Umfeldmodells ROIs zu generieren und die potentiellen ROIs nach Objekten zu untersuchen, um z.B. teilverdeckte Objekte zu erkennen, was aktuell nur mit einer hochauflösenden Sensorik möglich ist. In einer weiteren Ausprägung ist anhand des Situationsverständnisses eine Priorisierung der ROIs möglich, sodass die Rechnerkapazität effizient genutzt werden kann.

Der zweite Sensor kann ein hochauflösender Sensor sein, insbesondere eine Kamera und weiter insbesondere eine hochauflösende Kamera.

Die empfangenen Sensordaten des zweiten Sensors können nur Informationen für den einen oder die mehreren Interessensbereiche liefern, abgesehen natürlich von Formatdaten. Hierdurch wird die Echtzeitfähigkeit des Verfahrens erreicht, da die gesamte Datenmenge des zweiten Sensors nicht in Echtzeit verarbeitbar wäre.

Es kann vorgesehen sein, dass der eine oder die mehreren Interessensbereiche derart bestimmt werden, dass im ersten Umfeldmodell umfasste Objekte oder Teile davon in dem einen oder den mehreren Interessensbereichen umfasst sind; wobei die erkannten Objekte in dem einen oder den mehreren Interessensbereichen beim Erstellen eines zweiten Umfeldmodells für Objekte des ersten Umfeldmodells mehr Details bereitstellen oder Objekte des ersten Umfeldmodells bestätigen. Auf diese Weise dient der zweite Sensor somit zur Detaillierung beziehungsweise Bestätigung von bereits im ersten Umfeldmodell umfassten Objekten.

Es kann auch das Aufstellen einer Vermutung (also einer Hypothese) zu möglichen weiteren Objekten und deren Position im ersten Umfeldmodell vorgesehen sein, insbesondere zu von anderen Objekten teilverdecken Objekten im ersten Umfeldmodell; wobei der eine oder die mehreren Interessensbereiche derart bestimmt werden, dass er beziehungsweise sie mögliche weitere Objekte umfasst beziehungsweise umfassen. In diesem Fall sind also Objekte im ersten Umfeldmodell noch nicht erkannt worden, werden aber aufgrund der Situation dort vermutet, beispielsweise in Lücken zwischen am Straßenrand parkenden Fahrzeugen.

In einer bevorzugten Weiterbildung umfasst das Bestimmen von einem oder mehreren Interessensbereichen Folgendes: Bestimmen von einem oder mehreren möglichen Interessensbereichen; Prüfen, ob die Anzahl der mehreren möglichen Interessensbereiche einen Schwellwert überschreitet und/oder Prüfen, ob die erwartete Verarbeitungszeit für den einen oder die mehreren möglichen Interessensbereiche einen Schwellwert überschreitet; Falls die Prüfung oder die Prüfungen eine Überschreitung ergibt beziehungsweise ergeben: Auswählen eines insbesondere modifizierten Interessensbereiches oder einer Mehrzahl von Interessensbereichen aus dem einen oder den mehreren möglichen Interessensbereichen.

Nur dieser ausgewählte Interessensbereich oder die ausgewählte Mehrzahl von Interessensbereichen ist beziehungsweise sind dann bestimmt und nur für diese werden Sensordaten empfangen. Ein modifizierter Interessenbereich kann dann verwendet werden, wenn der mögliche Interessensbereich derart groß ist, dass die Verarbeitungszeit zu lange wäre, um hinreichend schnell ein zweites Umfeldmodell bereit zu stellen. Die Modifikation kann das Verkleinern des möglichen Interessensbereiches umfassen.

Das Prüfen, ob die erwartete Verarbeitungszeit für den einen oder die mehreren möglichen Interessensbereiche einen Schwellwert überschreitet kann sich auf die Verarbeitungszeit beziehen, die für die Erkennung von einem Objekt oder von einer Eigenschaft eines Objektes und/oder die Erstellung des zweiten Umfeldmodells für den oder die möglichen Interessensbereiche benötigt wird.

Die möglichen Interessensbereiche können auch als Kandidaten-Interessensbereiche bezeichnet werden.

Weiterhin kann vorgesehen sein, dass falls die Prüfung keine Überschreitung feststellt, der eine oder die mehreren möglichen Interessensbereiche bestimmt sind (und in den folgenden Schritten verarbeitet werden).

Ein typischer Anwendungsfall für die Auswahl ist beispielsweise gegeben, wenn der gesamte Straßenrand auf der rechten und linken Seite als (mögliche) Interessensbereiche bestimmt wird. In diesem Fall kann es vorkommen, dass die Verarbeitungskapazität des Systems (zweiter Sensor und Umfelderzeugung des zweiten Umfeldmodells) nicht ausreichen, um in Echtzeit ein zweites Umfeldmodell bereitzustellen. Es ist somit eine Priorisierung nötig.

Bei dem Auswählen kann eines oder beide der Folgenden berücksichtigt werden: Die Kollisionswahrscheinlichkeit des Fahrzeugs unter der Annahme, dass sich ein Objekt in dem jeweiligen Interessensbereich befindet, und der Zeitpunkt, zu dem für den jeweiligen Interessensbereich oder einem räumlich ähnlichen Interessensbereich zuletzt Sensordaten empfangen wurden oder unter Berücksichtigung dessen zuletzt ein zweite Umfeldmodell erstellt wurde.

Eine erhöhte Kollisionswahrscheinlichkeit besteht beispielsweise bei Objekten in Interessensbereichen, die örtlich dem Fahrzeug näher sind. Ebenso besteht eine erhöhte Kollisionswahrscheinlichkeit bei Objekten in Interessensbereichen, die sich auf der vom Fahrzeug aus gesehen rechten Straßenseite befinden im Vergleich zur linken Straßenseite. Auf diese Weise wird beispielsweise ein eine Parklücke in 15m Entfernung abbildender Interessensbereich eher gewählt als ein eine Parklücke in 30m Entfernung abbildender Interessensbereich.

Durch die Berücksichtigung des Zeitpunkts, zu dem für den jeweiligen Interessensbereich oder einem räumlich ähnlichen Interessensbereich zuletzt Sensordaten empfangen wurden, kann erreicht werden, dass derselbe oder ein ähnlicher Interessensbereich nicht fortlaufend untersucht wird, sondern auch andere Interessensbereiche untersucht werden. Häufig werden nämlich die möglichen Interessensbereiche (also die potenziell interessanten) zu aufeinanderfolgenden Zeitpunkten bei einer wiederholten Ausführung des Verfahrens (oder nur der Bestimmung von Interessenbereichen und Beibehaltung des ersten Umfeldmodells) gleich oder ähnlich sein. Bei der Berücksichtigung des letzten Zeitpunktes des Empfangs von Sensordaten (oder deren Verarbeitung durch Objekt- und Objekteigenschaftserkennung oder deren Berücksichtigung bei der Erstellung des zweiten Umfeldmodells) kann so erreicht werden, dass eben der jeweilige Interessensbereich nicht ausgewählt wird, wenn dieser oder ein ähnlicher bereits bei der letzten Verarbeitung oder innerhalb einer vorbestimmten Zeitschwelle (oder Anzahl an Verarbeitungen) zur Verarbeitung bestimmt wurde. Auf diese Weise bleiben die Interessensbereiche oder der Interessensbereich nicht immer derselbe sondern "scannt" beziehungsweise "scannen" über mehrere interessante Bereiche hinweg bei einer mehrmaligen Ausführung des Verfahrens. Somit kann beispielsweise auch erreicht werden, dass nicht zweimal eine Parklücke untersucht wird, wenn beim ersten Mal kein Objekt erkannt wurde. Es kann vorgesehen sein, dass sich die Interessensbereiche bei mehrmaliger Ausführung des Verfahrens nicht überlappen. Darüber hinaus kann die Beobachtungsdauer, also wie oft und/oder wie lange ein Interessensbereich bestimmt wird, auf Grund der Kollisionswahrscheinlichkeit (oder allgemeiner Fahrzeugrelevanz) bestimmt werden.

In einem anderen Aspekt umfasst eine Vorrichtung elektronische Rechenmittel, wobei die Vorrichtung dazu eingerichtet ist, eines der vorstehenden Verfahren auszuführen. Die elektronischen Rechenmittel können ein Computer oder ein Mikrocontroller sein. Gegebenenfalls verfügt die Vorrichtung über die notwendigen Schnittstellen zu den Sensoren.

In wieder einem anderen Aspekt umfasst ein Computerprogramm Anweisungen zum Ausführen eines der vorstehenden Verfahren. Das Computerprogramm kann Anweisungen umfassen, die derart gestaltet sind, dass sie einen Computer bei deren Ausführung zum Ausführen eines der vorstehenden Verfahren veranlasst.

### KURZE BESCHREIBUNG DER ZEICHNUNG

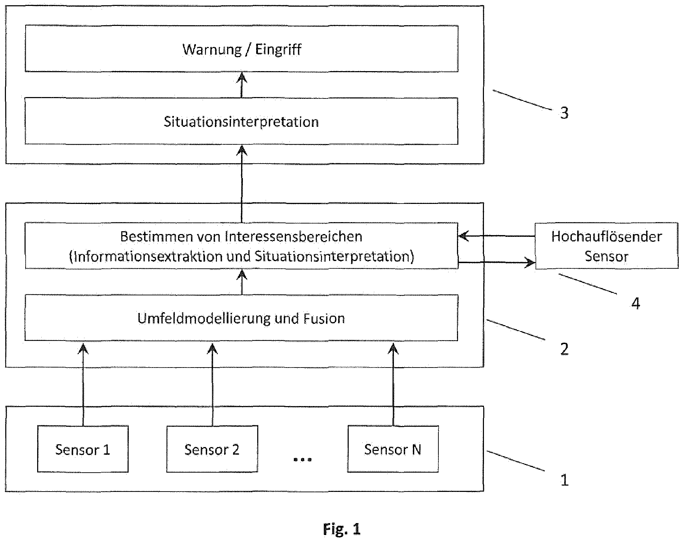

Fig. 1 zeigt schematisch den Aufbau und Einbettung einer Vorrichtung gemäß einem Ausführungsbeispiel.

### DETAILLIERTE BESCHREIBUNG DES AUSFÜHRUNGSBEISPIELS

Fig. 1 zeigt schematisch den Aufbau und Einbettung einer Vorrichtung 2 gemäß einem Ausführungsbeispiel. Eine Gruppe von ersten Umfeldsensoren 1 liefert an die Vorrichtung 2 (hier der Computer 2) jeweils eine Liste mit erkannten Objekten und deren Position. Der Computer 2 erzeugt mithilfe eines Fusionsmoduls ein erstes Umfeldmodell, das die erkannten Objekte und deren Position angibt. Auf dieser Basis werden dann die Interessensbereiche beziehungsweise gegebenenfalls nur ein Interessensbereich bestimmt. Hierzu werden Informationen aus dem ersten Umfeldmodell extrahiert und die Situation im Umfeldmodells interpretiert. Beispielsweise wird eine Reihe parkender Fahrzeuge am Straßenrand erkannt und Interessensbereiche in den Lücken zwischen den Fahrzeugen bestimmt. Diese Interessensbereiche werden nun an einen hochauflösenden Sensor 4 weitergeleitet. Zusätzlich können an den Sensor 4 auch das Grid, auf dem das Umfeldmodell basiert, weitergeleitet werden. Gegebenenfalls kann vorgesehen sein, dass die Interessensbereiche als Bereiche im Grid angegeben sind.

Der hochauflösende Sensor 4 wertet seine Sensordaten, die in dem Interessensbereich liegen aus und führt für diese Sensordaten eine Objekterkennung durch. Gegebenenfalls kann bereits die Kopfpose oder die Blickrichtung (hierin auch als Objekte verstanden) eines im Interessensbereich erkannten Fußgängers bestimmt werden. Das erkannte Objekt sowie dessen Position im Grid und gegebenenfalls das Grid selbst werden wieder zurück zum Computer 2 übertragen. Es kann vorgesehen sein, dass der Sensor 4 das Grid modifiziert. Im Computer 2 wird ein zweites Umfeldmodell erzeugt und dabei die vom Sensor 4 gelieferten Informationen zu den erkannten Objekten berücksichtigt und eingearbeitet.

Das zweite Umfeldmodell wird einem Fahrerassistenzsystem 3 zur Verfügung gestellt. Dieses kann eine funktionsspezifische Interpretation des zweiten Umfeldmodells vornehmen und gegebenenfalls eine Warnung ausgeben oder sogar einen Fahreingriff ausführen.

## Patentansprüche

1. Verfahren zum Erstellen eines Umfeldmodells für ein Fahrzeug, umfassend:
Erstellen eines ersten Umfeldmodells basierend auf Informationen zu Objekten, die mithilfe von Sensordaten von Sensoren einer Gruppe von ersten Sensoren erkannt wurden;
wobei das Umfeldmodell Objekte und deren Position beschreibt;
Bestimmen von einem oder mehreren Interessensbereichen im ersten Umfeldmodell zur weiteren Untersuchung;
Empfangen von Sensordaten eines zweiten Sensors, der nicht in der Gruppe der ersten Sensoren umfasst ist, für den einen oder die mehreren Interessensbereiche;
Erkennen eines Objektes oder einer Eigenschaft eines Objektes in dem einen oder den mehreren Interessensbereichen basierend auf den empfangenen Sensordaten des zweiten Sensors;
Erstellen eines zweiten Umfeldmodells basierend auf dem ersten Umfeldmodell und dem erkannten Objekt oder der erkannten Eigenschaft eines Objektes in dem einen oder den mehreren Interessensbereichen;
**dadurch gekennzeichnet, dass** das Bestimmen von einem oder mehreren Interessensbereichen Folgendes umfasst:
Bestimmen von einem oder mehreren möglichen Interessensbereichen;
Prüfen, ob die Anzahl der mehreren möglichen Interessensbereiche einen Schwellwert überschreitet und/oder Prüfen, ob die erwartete Verarbeitungszeit der Sensordaten des einen oder der mehreren möglichen Interessensbereiche einen Schwellwert überschreitet;
Falls die Prüfung oder die Prüfungen eine Überschreitung ergibt beziehungsweise ergeben:
Auswählen eines insbesondere modifizierten Interessensbereiches oder einer Mehrzahl von Interessensbereichen aus dem einen oder den mehreren möglichen Interessensbereichen;
wobei bei dem Auswählen eines oder beide der Folgenden berücksichtigt wird:
Die Kollisionswahrscheinlichkeit des Fahrzeugs unter der Annahme, dass sich ein Objekt in dem jeweiligen Interessensbereich befindet, und
Der Zeitpunkt, zu dem für den jeweiligen Interessensbereich oder einem räumlich ähnlichen Interessensbereich zuletzt Sensordaten empfangen wurden oder unter Berücksichtigung dessen zuletzt ein zweite Umfeldmodell erstellt wurde.

2. Verfahren nach Anspruch 1, wobei der zweite Sensor ein hochauflösender Sensor ist, insbesondere eine Kamera und weiter insbesondere eine hochauflösende Kamera.

3. Verfahren nach einem der vorhergehenden Ansprüche, wobei die empfangenen Sensordaten des zweiten Sensors nur Informationen für den einen oder die mehreren Interessensbereiche liefern.

4. Verfahren nach einem der vorhergehenden Ansprüche, wobei der zweite Sensor eine hochauflösende Kamera ist und wobei die Sensordaten Pixel sind, die eine Kameraaufnahme für den einen oder die mehreren Interessensbereiche darstellen.

5. Verfahren nach einem der vorhergehenden Ansprüche,
wobei der eine oder die mehreren Interessensbereiche derart bestimmt werden, dass im ersten Umfeldmodell umfasste Objekte oder Teile davon in dem einen oder den mehreren Interessensbereichen umfasst sind;
wobei die erkannten Objekte in dem einen oder den mehreren Interessensbereichen beim Erstellen eines zweiten Umfeldmodells für Objekte des ersten Umfeldmodells mehr Details bereitstellen oder Objekte des ersten Umfeldmodells bestätigen.

6. Verfahren nach einem der Ansprüche 1 bis 4, ferner umfassend:
Aufstellen einer Vermutung zu möglichen weiteren Objekten und deren Position im ersten Umfeldmodell, insbesondere zu von anderen Objekten teilverdecken Objekten im ersten Umfeldmodell;
wobei der eine oder die mehreren Interessensbereiche derart bestimmt werden, dass er beziehungsweise sie mögliche weitere Objekte umfasst beziehungsweise umfassen.

7. Verfahren nach Anspruch 6,
wobei beim Aufstellen einer Vermutung Lücken zwischen am Straßenrand parkenden Fahrzeugen berücksichtigt werden.

8. Verfahren nach einem der vorhergehenden Ansprüche, wobei
Das Erkennen von Objekten in dem einen oder den mehreren Interessensbereichen das Erkennen einer Kopfpose oder Blickrichtung eines Fußgängers oder das Erkennen einer Blinkeraktivierung eines anderen Verkehrsteilnehmers umfasst.

9. Vorrichtung, umfassend elektronische Rechenmittel, wobei die Vorrichtung dazu eingerichtet ist eines der Verfahren nach einem der vorhergehenden Ansprüche auszuführen.

10. Computerprogramm, umfassend Anweisungen zum Ausführen eines der Verfahren nach einem der Ansprüche 1 bis 8.

## Claims

1. A method for creating an environmental model for a vehicle, comprising:
creating a first environmental model based on information concerning objects which have been detected by means of sensor data from sensors of a group of first sensors,
wherein the environmental model describes objects and the position thereof;
determining one or a plurality of areas of interest in the first environmental model for further investigation;
receiving sensor data of a second sensor which is not included in the group of first sensors, for the one or the plurality of areas of interest;
detecting an object or a characteristic of an object in the one or the plurality of areas of interest, based on the sensor data received from the second sensor;
creating a second environmental model based on the first environmental model and on the detected object or on the detected characteristic of an object in the one or the plurality of areas of interest;
**characterised in that** the determination of one or a plurality of areas of interest comprises the following:
determining one or a plurality of possible areas of interest;
checking whether the number of the plurality of possible areas of interest exceeds a threshold value and/or checking whether the expected processing time of the sensor data of the one or of the plurality of possible areas of interest exceeds a threshold value;
if the check does, or the checks do exceed a threshold value:
selecting a particularly modified area of interest or a plurality of areas of interest from the one or the plurality of possible areas of interest;
wherein the selection takes into consideration one or more of the following:
the likelihood of a collision of the vehicle, assuming that an object is located in the respective area of interest, and
the point in time at which sensor data have been most recently received for the respective area of interest or for a spatially similar area of interest or, while considering this, a second environmental model has been most recently created.

2. A method according to claim 1, wherein the second sensor is a high-resolution sensor, more especially a camera and more especially a high-resolution camera.

3. A method according to either one of the preceding claims, wherein the sensor data received from the second sensor only provide information for the one or the plurality of areas of interest.

4. A method according to any one of the preceding claims, wherein the second sensor is a high-resolution camera and wherein the sensor data are pixels which represent a camera photograph for the one or for the plurality of areas of interest.

5. A method according to any one of the preceding claims,
wherein the one or the plurality of areas of interest are determined such that objects or parts thereof included in the first environmental model are included in the one or plurality of areas of interest;
wherein while creating a second environmental model, the objects detected in the one or the plurality of areas of interest provide more details for objects of the first environmental model or confirm objects of the first environmental model.

6. A method according to any one of claims 1 to 4, further comprising:
making an assumption concerning possible further objects and the position thereof in the first environmental model, more especially concerning objects which are partly hidden by other objects, in the first environmental model;
wherein the one or the plurality of areas of interest are determined such that it includes or they include possible further objects.

7. A method according to claim 6, wherein gaps between vehicles parked by the side of the road are taken into consideration when making an assumption.

8. A method according to any one of the preceding claims, wherein the detection of objects in the one or the plurality of areas of interest comprises the detection of a head pose or viewing direction of a pedestrian or the detection of an indicator activation by another road user.

9. A device, comprising electronic computational means, wherein the device is configured to implement one of the methods according to any one of the preceding claims.

10. A computer program, comprising instructions for implementing one of the methods according to any one of claims 1 to 8.

## Revendications

1. Procédé permettant de créer un modèle d'environnement pour un véhicule comprenant des étapes consistant à :
- créer un premier modèle d'environnement sur le fondement d'informations concernant des objets ayant été identifiés à l'aide de données d'un groupe de premiers capteurs,
- le modèle d'environnement décrivant des objets et leur position,
- déterminer une ou plusieurs zone(s) intéressante(s) dans le premier modèle d'environnement pour effectuer une analyse ultérieure,
- recevoir d'un second capteur qui n'appartient pas au groupe des premiers capteurs, des données concernant la ou les zone(s) intéressante(s),
- identifier un objet ou une propriété d'un objet dans la ou les zone(s) intéressante(s) sur le fondement des données reçues à partir du second capteur,
- créer un second modèle d'environnement sur le fondement du premier modèle d'environnement et de l'objet identifié ou de la propriété identifiée d'un objet dans la ou les zone(s) intéressante(s),
**caractérisé en ce que**
la détermination d'une ou de plusieurs zone(s) intéressante(s) comprend des étapes consistant à :
- déterminer une ou plusieurs zone(s) intéressante(s) possible(s),
- vérifier si le nombre de zones intéressantes possibles dépasse une valeur de seuil et/ou vérifier si le temps de traitement attendu des données de capteur de la ou des zone(s) intéressante(s) possible(s) dépasse une valeur de seuil,
- dans le cas où la ou les contrôle(s) révèle(nt) un dépassement,
- sélectionner une zone intéressante en particulier modifiée ou plusieurs zones intéressantes en particulier modifiées à partir de la ou des zone(s) intéressante(s) possible(s),
- lors de la sélection, au moins l'un des éléments suivants est pris en considération :
- le caractère vraisemblable de collision du véhicule en supposant qu'un objet se trouve dans la zone intéressante respective, et
- l'instant auquel pour la zone intéressante respective ou une zone intéressante spatialement similaire des données de capteur ont été reçues pour la dernière fois ou en prenant en considération celui auquel un second modèle d'environnement a été créé pour la dernière fois.

2. Procédé conforme à la revendication 1,
selon lequel
le second capteur est un capteur à haute résolution, en particulier une caméra et de façon plus particulière une caméra à haute résolution.

3. Procédé conforme à l'une des revendications précédentes,
selon lequel
les données reçues à partir du second capteur ne fournissent que des informations concernant la ou les zone(s) intéressante(s).

4. Procédé conforme à l'une des revendications précédentes,
selon lequel
le second capteur est une caméra à haute résolution et les données de capteur sont des pixels qui représentent une prise de vue de caméra pour la ou les zone(s) intéressante(s).

5. Procédé conforme à l'une des revendications précédentes,
selon lequel
la ou les zone(s) intéressante(s) est(sont) déterminée(s) de sorte que des objets contenus dans le premier modèle d'environnement ou une partie de ces objets soit contenus dans la ou les zone(s) intéressante(s),
les objets reconnus dans la ou les zone(s) intéressante(s), lors de la création d'un second modèle d'environnement, fournissent plus de détails pour des objets du premier modèle d'environnement ou confirment des objets du premier modèle d'environnement.

6. Procédé conforme à l'une des revendications 1 à 4,
comprenant, en outre, des étapes consistant à :
- faire une supposition concernant d'autres objets possibles et leur position dans le premier modèle d'environnement en particulier concernant des objets en partie masqués par d'autres objets dans le premier modèle d'environnement,
- la ou les zone(s) intéressante(s) étant déterminées de sorte qu'elle(s) comprenne(nt) d'autres objets possibles.

7. Procédé conforme à la revendication 6,
selon lequel
lors de la supposition, les intervalles entre des véhicules stationnant sur le bord de la chaussée sont pris en considération.

8. Procédé conforme à l'une des revendications précédentes,
selon lequel
l'identification d'objets dans la ou les zone(s) intéressante(s) comprend l'identification d'une pose de tête, ou de la direction du regard d'un piéton ou l'identification de l'activation des clignotants d'un autre participant au trafic.

9. Dispositif comprenant des moyens de calcul électroniques, ce dispositif étant réalisé pour permettre la mise en oeuvre du procédé conforme aux revendications précédentes.

10. Programme d'ordinateur comprenant des instructions de code de programme permettant la mise en oeuvre du procédé conforme à l'une des revendications 1 à 8.
